# EUROPÄISCHE PATENTSCHRIFT

(11) **EP 2 497 977 B1**
(45) Veröffentlichungstag und Bekanntmachung des Hinweises auf die Patenterteilung: **06.05.2015**
(21) Anmeldenummer: 12158900.6
(22) Anmeldetag: 09.03.2012
(51) Int. Cl.: F16J 15/00, F16J 15/32, F16J 15/16

(54) **Wellendichtungssystem**
Shaft seal system
Dispositif de joint pour arbre

(30) Priorität: 09.03.2011 DE 102011005308
(43) Veröffentlichungstag der Anmeldung: 12.09.2012
(73) Patentinhaber: Lenze Drives GmbH, 32699 Extertal (DE); Universität Paderborn, 33095 Paderborn (DE)
(72) Erfinder: Zimmer, Prof. Dr. Detmar, 32657 Lemgo (DE); Nolte, Karsten, 33100 Paderborn (DE); Hütte, Jürgen, 32683 Barntrup (DE)
(74) Vertreter: Patentanwälte Ruff, Wilhelm, Beier, Dauster & Partner

(56) Entgegenhaltungen:
- EP-A2- 0 246 665
- DE-A1-102007 007 036
- DE-U1- 9 201 556
- FR-A- 1 003 653

## Beschreibung

Die Erfindung betrifft ein Wellendichtsystem zur Anordnung zwischen einer um eine Wellenachse drehbaren Welle und einem die Welle umgebenden feststehenden Gehäuse, umfassend einen zum Gehäuse ortsfesten Statorabschnitt, einen zur Welle zumindest drehfesten Rotorabschnitt und einen umlaufenden elastischen Dichtring mit einer elastischen Dichtlippe, der in einem Spalt zwischen dem Statorabschnitt und dem Rotorabschnitt angeordnet und an einem der Abschnitte festgelegt ist, wobei die Dichtlippe bei Stillstand der Welle am gegenüberliegenden Abschnitt anliegt und bei Rotation der Welle zur Erreichung eine Berührungsfreiheit zu diesem gegenüberliegenden Gegenabschnitt beabstandet wird.

Wellendichtsysteme dienen dem Zweck, in Axialrichtung aneinander angrenzende Umgebungsbereiche der Welle gegeneinander zu isolieren. Hierdurch kann beispielsweise der Austritt von Öl oder einem Öl/Luft-Gemisch aus einem Bereich in einen benachbarten Bereich, der frei von Öl bleiben soll, verhindert werden. Bekannte Wellendichtsysteme gibt es sowohl als berührungsfreie und berührungsbehaftete Dichtsysteme. Bei berührungsbehafteten Dichtsystemen, zu denen beispielsweise Wellendichtringe gehören, liegt die Dichtlippe permanent an dem gegenüber der Dichtlippe rotierenden Gegenabschnitt, also dem Rotorabschnitt oder dem Statorabschnitt, an. Selbst bei sehr guter Oberflächenbeschaffenheit führt dies zu einem hohen Verschleiß, insbesondere bei hohen Drehzahlen. Berührungsfreie Wellendichtsysteme, die beispielsweise in der Form von Labyrinthdichtungen bekannt sind, belassen einen schmalen Spalt zwischen den gegeneinander rotierenden Flächen, so dass der Verschleiß deutlich reduziert oder vermieden werden kann. Allerdings ist bei solchen Dichtsystemen keine vollständige Abdichtung zu erzielen.

Der systembedingt vorhandene Spalt erlaubt eine gewisse Leckage, die im Einzelfall das akzeptable Maß übersteigen kann.

Gattungsgemäße Wellendichtsysteme sind dafür ausgelegt, bei Stillstand oder geringen Rotationsgeschwindigkeiten der Welle berührungsbehaftet zu arbeiten und somit eine vollständige Abdichtung zu gewährleisten. Bei höheren Drehzahlen hingegen entfällt der Berührkontakt, so dass bei diesen höheren Drehzahlen der Verschleiß verhindert wird. Durch eine geeignete Anordnung kann durch die Zentrifugalkraftwirkung dennoch bei solchen Systemen verhindert werden, dass im Betrieb Fluid durch die Dichtung hindurch austreten kann. Ein derartiges Wellendichtsystem ist beispielsweise aus der EP 1 122 472 B1 bekannt. Bei diesem ist das Ablösen der Dichtlippe vom Gegenabschnitt, im Falle der EP 1 122 472 B1 dem Statorabschnitt, dadurch realisiert, dass die Dichtlippe derart ausgelegt ist, dass sie in Folge der bei hohen Drehzahlen zu erzielenden Zentrifugalkraftwirkung von der Gegenfläche, also dem Statorabschnitt, getrennt wird. Dieses System hat sich in der Vergangenheit bewährt.

Als problematisch hat sich jedoch herausgestellt, dass bei geringen Drehzahlen und/oder bei geringen Wellendurchmessern nicht die erforderliche Zentrifugalkraft erreicht wird, die für ein zuverlässiges Trennen der Dichtlippe vom Gegenabschnitt erforderlich ist. Die Systeme arbeiten demnach über einen längeren Zeitraum als erwünscht mit hohem Verschleiß an der Dichtlippe. Die Variierung des elastischen Materials des Dichtrings zur Senkung der zum Ablösen erforderlichen Kräfte führt hier nicht zu befriedigenden Ergebnissen, da hierdurch auch die Dichtigkeit im Stillstandszustand beeinträchtigt werden kann.

Bekannt ist es aus der DE 70 24 197 bereits, in die Dichtlippe Zusatzgewichte einzubetten, die zur Steigerung der Zentrifugalkraft beitragen. Es hat sich jedoch herausgestellt, dass dies häufig nicht ausreichend ist.

Wenn die Dichtlippe derart mit Zusatzgewichten versehen wird, wird sie recht dick und büßt gegebenenfalls Beweglichkeit ein, was einer Trennung vom Stator entgegenwirken kann.

Bekannt sind weiterhin auch Wellendichtsysteme mit Aktoren, die zur Verlagerung der Dichtlippe Verwendung finden. So schlägt die DE 38 15 655 A1 vor, eine Reserve-Dichtung mit einem Überdruck zu beaufschlagen, um im Fall von Störungen an anderen Dichtungen den die Welle umgebenden Ringspalt zu schließen. Die DE 10 2007 028 561 A1 und DE 10 2007 007 036 A1 schlagen umlaufende Aktoren vor, die durch Bestromung auf die Lage einer Dichtlippe Einfluss nehmen können.

Die Gebrauchsmusterschrift DE 92 01 556 U1, die den nächstliegenden Stand der Technik repräsentiert, zeigt eine Lippendichtung mit einem Zusatzmassenkörper.

Die DE 10 2007 007 036 A1 zeigt eine Dichtung mit einer Dichtlippe, die einen magnetischen Abschnitt aufweist, wobei an einem Tragkörper ein elektromagnetisch wirksames Element angeordnet ist, welches mit dem magnetischem Abschnitt in Wirkverbindung steht.

Die FR 1 003 653 A zeigt ein Wellendichtsystem, bei dem eine Dichtwirkung über eine axiale Verlagerung eines Rings beeinflusst werden kann, wobei der Ring zentrifugalkraftabhängig in Axialrichtung Kraft beaufschlagt ist.

### Aufgabe und Lösung

Aufgabe der Erfindung ist es, ein gattungsgemäßes Wellendichtsystem dahingehend weiterzubilden, dass dieses bei geringen Wellendurchmessern und/oder bereits bei geringen Rotationsgeschwindigkeiten ein zuverlässiges Trennen der Dichtlippe vom Gegenabschnitt gewährleistet, ohne dass dies mit der Inkaufnahme einer mangelhaften Abdichtung im Stillstand einhergeht.

Gemäß der Erfindung ist bei einem gattungsgemäßen Wellendichtsystem vorgesehen, dass eine Mehrzahl von aktiven Aktoren vorgesehen ist, die derart ausgebildet und angeordnet sind, dass durch Beaufschlagung der Aktoren mit Strom oder einem Steuerfluid die Dichtlippe gegenüber dem Gegenabschnitt verlagerbar ist. Weiterhin ist eine Steuereinrichtung zur Steuerung der Beaufschlagung der Aktoren mit Strom oder dem Steuerfluid vorgesehen.

Bei einer solchen Gestaltung kann auf die Lage der Dichtlippe mittels der aktiven Aktoren gezielt Einfluss genommen werden.

Die mehreren Aktoren sind dabei im Bereich der Dichtlippe angeordnet. Vorzugsweise sind sie außenseitig der Dichtlippe über deren Umfang verteilt, um eine gleichmäßige Kraftwirkung auf die Dichtlippe radial nach innen oder radial nach außen bewirken zu können.

Die Aktoren und die Dichtlippe können auf verschiedene Art aufeinander abgestimmt sein. Die Aktoren können bidirektional derart auf die Dichtlippe wirken, dass sie diese entweder an die Welle andrücken oder von dieser lösen kann. Er kann jedoch auch so ausgebildet sein, dass er nur in eine Richtung, also radial nach innen oder radial nach außen, auf die Dichtlippe wirken kann. In diesen Fällen ist die Dichtlippe so auszugestalten, dass sie ohne Einwirkung der Aktoren jeweils die gegensätzliche Position einnimmt. Bei Aktoren, der die Dichtlippe radial nach innen kraftbeaufschlagen können, ist die Dichtlippe so auszubilden, dass sie - zumindest bei drehender Welle - von der Welle beabstandet ist. Bei einem Aktor, der die Dichtlippe nach außen kraftbeaufschlagen kann, ist die Dichtlippe so auszubilden, dass sie - zumindest bei stehender Welle - an der Dichtlippe anliegt. Weiterhin bestehen Variationsmöglichkeiten hinsichtlich der Festlegung, welche Bewegungsrichtung der Aktor bei Bestromung oder Beaufschlagung mit einem Steuerfluid durchführt. So kann beispielsweise unabhängig von der oben genannten Art der Wirkungsweise der Aktor so ausgebildet sein, dass er bei Bestromung radial nach außen oder aber radial nach innen bewegt wird, wobei durch eine Feder oder dergleichen bei Wegfall der Bestromung eine Verlagerung in entgegengesetzte Richtung bewirkt wird.

Von Vorteil ist eine Anordnung, bei der die Bestromung zur Trennung der Dichtlippe vom Gegenabschnitt führt, da bei einer solchen Gestaltung im Störungsfalle und bei in Folge dessen entfallender Bestromung der Aktoren die Dichtigkeit des Wellendichtsystems gewährleistet ist.

Bei den Aktoren handelt es sich vorzugsweise um Komponenten mit zwei geführt gegeneinander beweglichen Teilen, nämlich einer Basis zur vorzugsweise ortsfesten Anbringung an einem die Welle umgebenden Gehäuse und einem Aktorglied, welches demgegenüber durch Bestromung oder Fluidbeaufschlagung verlagerbar ist. Bei von außen auf die Dichtlippe wirkenden Aktoren können die Aktorglieder wie beispielsweise Druckstifte gegen die Dichtlippe gedrückt werden, so dass die Dichtlippe nach innen ausweicht.

Es ist grundsätzlich beliebig, ob die Aktoren und der Dichtring am Rotor oder am Stator festgelegt sind. Von Vorteil ist jedoch eine Anordnung des Dichtrings und des Aktors am Stator, da dadurch die Zuführung von Strom oder einem Steuerfluid deutlich erleichtert ist.

Als aktive Aktoren bieten sich für die erfindungsgemäße Gestaltung mehrere Möglichkeiten an. So sind ein elektromagnetisch wirkende Aktoren möglich, die bei Bestromung einen Wirkabschnitt verlagert, der auf den Dichtring wirkt, oder in den Dichtring integriert ist. Hierzu verwandte Gestaltungen sehen elektrostatisch wirkende Aktoren, piezoelektrisch wirkende Aktoren oder elektrostiktiv wirkende Aktoren vor. Ein grundsätzlich alternatives System hierzu verfügt über Aktoren mit einer Fluidkammer zur Aufnahme des Steuerfluids. Bei einer solchen Gestaltung bewirkt die Steuereinrichtung demzufolge zur gezielten Erreichung einer Trennung oder einer Herstellung eines Berührkontaktes zwischen Dichtlippe und Gegenabschnitt eine Zuführung eines gasförmigen oder flüssigen Steuerfluids in die Fluidkammer. Je nach Ausgestaltung dieser Fluidkammer kann hierdurch eine Bewegung der Dichtlippe in die gewünschte Richtung erzielt werden.

Die Steuereinrichtung ist vorzugsweise dafür ausgebildet, die Drehzahl der Welle zu erfassen bzw. diese von anderweitigen elektronischen Systemen zugeführt zu bekommen, um die Steuerung des Aktors in Abhängigkeit dieser Drehzahl vornehmen zu können.

Vorzugsweise sind mindestens drei Aktoren vorgesehen, insbesondere sechs oder acht Aktoren, wobei diese vorzugsweise gleichmäßig über den Umfang verteilt sind. Je mehr Aktoren vorgesehen sind, desto weniger schwer wiegt der Ausfall eines einzelnen Aktors.

### Kurzbeschreibung der Zeichnungen

Weitere Aspekte und Vorteile der Erfindung ergeben sich außer aus den Ansprüchen auch aus den nachfolgend beschriebenen Ausführungsbeispielen zu dieser Erfindung. Dabei zeigen:

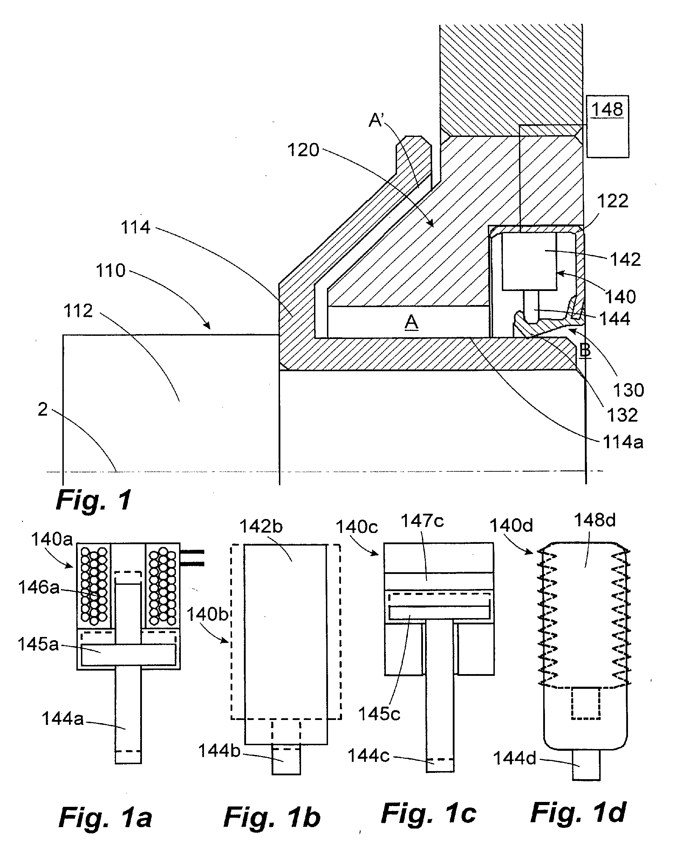

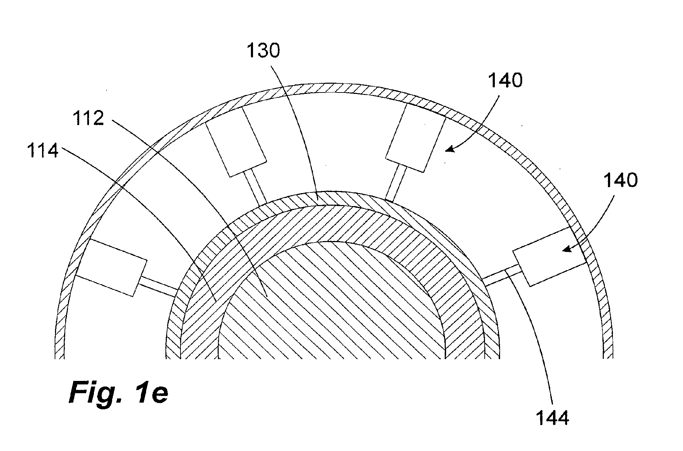

- Fig. 1 und 1a - 1e: ein Ausführungsbeispiel eines erfindungsgemäßen Wellendichtsystems.

### Detaillierte Beschreibung der Ausführungsbeispiele

Figur 1 zeigt eine Ausführungsform eines erfindungsgemäßen Dichtsystems. Dieses findet zwischen einer Welle 112, die gemeinsam mit einem geschnitten dargestellten Radialflansch 114 den Rotor 110 des Systems bildet, und einem feststehenden Gehäuseabschnitt 120, der im Sinne der Erfindung den Statorabschnitt 120 bildet, Anwendung. Der hierfür vorgesehene Dichtring 130 ist an einem Blech 122 des Stators 120 befestigt und ist daher bezogen auf eine Drehachse 2 der Welle 112 drehunbeweglich gegenüber diesem Blech 122. Der Dichtring 130 erstreckt sich im Wesentlichen axial, wobei an seiner radial nach innen weisenden Seite eine Dichtlippe 132 vorgesehen ist, die im Stillstandszustand der Figur 1 auf einer Außenfläche 114a des Radialflansches 114 des Rotors anliegt. Radial außerhalb des Dichtrings 130 ist ein Aktor 140 dargestellt, der stellvertretend für eine Mehrzahl von über den Umfang angeordneten baugleichen Aktoren zu verstehen ist und der über eine fest am Stator vorgesehene Aktorenbasis 142 und einen radial gegenüber dieser Aktorenbasis 142 verlagerbaren Aktorstift 144 verfügt. Dieser Aktorstift 144 erstreckt sich bis zu einer Außenseite des Dichtrings 130.

Der Dichtring 130 weist eine Formgebung und Materialbeschaffenheit auf, die geeignet ist, bei Nichtvorliegen einer externen Kraftbeaufschlagung durch den Aktorenstift 144 die Dichtlippe 132 gegen eine Gegenfläche 114a am Radialflansch 114 zu drücken. Somit kann bei Stillstand der Welle 112 auf eine Einflussnahme des Aktors 140 verzichtet werden. Die Dichtlippe verhindert im Stillstandszustand durch Anliegen an der Gegenfläche 114a, dass Öl oder ein Öl/Luft-Gemisch aus einem Bereich A, in dem bestimmungsgemäß Öl vorgesehen ist, in einen Bereich B gelangt, der bestimmungsgemäß frei von Öl bleiben soll.

Sobald die Welle in Rotation versetzt wird, wird mittels einer Steuereinrichtung 148, die in Figur 1 nur schematisch dargestellt ist, der Aktor 140 bestromt. Diese Bestromung führt dazu, dass der Aktorstift 144 radial nach außen verlagert wird und dadurch die mit dem distalen Ende des Aktorstiftes verbundene Dichtlippe 132 von der Gegenfläche 114a trennt. Somit wird eine berührungslose Dichtung erreicht. Die Gefahr, dass durch den entstehenden Spalt zwischen der Dichtlippe 132 und der Gegenfläche 114a Öl in der Bereich B gelangt, ist gering, da aufgrund der Gestaltung des sich an Raum A anschließenden Spaltes A' das Öl innerhalb der Kammer A in Folge der Zentrifugalkraft radial nach außen in den Spalt A' gesogen wird.

Der Aktor 140 kann in verschiedener Art und Weise gestaltet sein, um in Reaktion auf diese Bestromung eine Verlagerung des Aktorstiftes 144 radial nach außen oder bei alternativen Gestaltungen radial nach innen zu bewirken. Die Fig. 1a bis 1d zeigen mögliche Ausgestaltungen 140a bis 140d, wobei durch gestrichelte Darstellung die Beweglichkeit des Aktorstiftes verdeutlicht wird.

Figur 1a zeigt eine beispielhafte Ausgestaltung, bei der der Aktor 140a über einen eine Spule umfassenden Elektromagneten 146a verfügt, der bei Bestromung den vom Elektromagneten umgebenen Aktorstift 144a mittels eines magnetisierbaren Kragens 145a, der am Aktorstift 144a vorgesehen ist, verlagert. Fig. 1b zeigt einen auf einem piezoelektrischen Effekt oder auf Elektrostriktion basierenden Aktor 140b, dessen Aktorbasis 142b durch das Anlegen von Strom verformbar ist. Fig. 1 c zeigt einen kapazitiven Aktor, der über eine Kondensatorplatte 147c verfügt, die vom Steuergerät 148 elektrisch geladen werden kann, um dadurch eine Bewegung einer gegenüberliegenden Gegenplatte 145c am Aktorstift 144c zu bewirken. Der Aktor der Fig. 1d weist eine Fluidkammer 148d auf, die über verformbare Seitenwandungen verfügt. Durch Befüllen der Fluidkammer 148d mit Luft oder einer Flüssigkeit bzw. durch Bewirkung eines Unterdrucks in der Fluidkammer 148d kann der Aktorstift 144d radial verlagert werden.

Alle Aktortypen sind in der Lage, durch Strombeaufschlagung bzw. Fluidbeaufschlagung eine Bewegung des Axialstiftes in radialer Richtung auf die Welle zu oder von der Welle weg zu bewirken. Bei nicht dargestellten Ausführungsformen kann jedoch zur Unterstützung auch eine zusätzliche Feder vorgesehen sein, die bei Wegfall der Bestromung oder Druckbeaufschlagung eine Bewegung des Aktorstiftes nach innen oder außen bewirkt.

Erfindungsgemäß sind mehrere Aktoren vorgesehen, so dass der Ausfall eines einzelnen Aktors die Funktionsweise nicht oder nicht gravierend beeinträchtigt. Fig. 1e verdeutlicht eine beispielhafte Aufteilung von insgesamt acht Aktoren 140, die über den Umfang verteilt sind. Dich Verlagerung des jeweiligen Aktorstiftes 144 können diese je nach Ausgestaltung die Dichtlippe 132 gegen die Welle drücken oder von der Welle 112 abziehen.

## Patentansprüche

1. Wellendichtsystem zur Anordnung zwischen einer um eine Wellenachse (2) drehbaren Welle (112) und einem die Welle umgebenden feststehenden Gehäuse, umfassend:
- einen zum Gehäuse ortsfesten Statorabschnitt (120),
- einen zur Welle (112) drehfesten Rotorabschnitt (114),
- einen umlaufenden elastischen Dichtring (130) mit einer elastische Dichtlippe (132), der in einem Spalt zwischen dem Statorabschnitt (120) und dem Rotorabschnitt (114) angeordnet und an einem der Abschnitte (120) festgelegt ist, wobei die Dichtlippe (132) bei Stillstand der Welle (112) am gegenüberliegenden Gegenabschnitt (114) anliegt und bei Rotation der Welle (112) zur Erreichung einer Berührungsfreiheit relativ zu diesem gegenüberliegenden Gegenabschnitt (114) beabstandet wird,
- eine Mehrzahl aktiver Aktoren (140, 140a, 140b, 140c, 140d), die derart ausgebildet und angeordnet sind, dass durch Beaufschlagung der Aktoren (140, 140a, 140b, 140c, 140d) mit Strom oder einem Steuerfluid die Dichtlippe (132) gegenüber dem Gegenabschnitt verlagerbar ist, und
- eine Steuereinrichtung (148) zur Steuerung der Beaufschlagung der Aktoren (140, 140a, 140b, 140c, 140d) mit Strom oder dem Steuerfluid,
**dadurch gekennzeichnet, dass**
- die Mehrzahl aktiver Aktoren (140, 140a, 140b, 140c, 140d) außenseitig der Dichtlippe (132) über deren Umfang verteilt sind.

2. Wellendichtsystem nach Anspruch 1,
**dadurch gekennzeichnet, dass**
der Dichtring (130) und die Aktoren (140) jeweils am Statorabschnitt (120) festgelegt sind.

3. Wellendichtsystem nach Anspruch 1 oder 2,
**dadurch gekennzeichnet, dass**
die Aktoren (140, 140a, 140b, 140c, 140d) ausgebildet sind als
- elektromagnetisch wirkende Aktoren (140, 140a),
- elektrostatisch wirkende Aktoren (140c),
- piezoelektrisch wirkende Aktoren (140b),
- elektrostriktive Aktoren (140b) oder
- Aktoren (140d) mit einer Fluidkammer (148d) zur Aufnahme des Steuerfluids.

## Claims

1. Shaft seal system to be arranged between a shaft (112) rotatable around a shaft axle (2) and a stationary housing encasing the shaft, comprising:
- a stator portion (120) fixed in location relative to the housing;
- a rotor portion (114) fixed in rotation relative to the shaft (112);
- a circumferential elastic sealing ring (130) having an elastic sealing lip (132), the sealing ring being disposed in a gap between the stator portion (120) and the rotor portion (114) and fixed to one of the portions (120), wherein the sealing lip (132) rests on the opposite counterpart portion (114) during an idle time of the shaft (112), and is spaced relative to said opposite counterpart portion (114), in order to obtain a contact-free condition, during rotation of the shaft (112);
- a plurality of active actuators (140, 140a, 140b, 140c, 140d) designed and arranged in such a manner that by applying a current or a control fluid to the actuators (140, 140a, 140b, 140c, 140d) the sealing lip (132) is displaceable in relation to the counterpart portion; and
- a control device (148) for controlling the application of current or control fluid to the actuators (140, 140a, 140b, 140c, 140d),
**characterized in that**
- the plurality of active actuators (140, 140a, 140b, 140c, 140d) are distributed on the outer side of the sealing lip (132) over the circumference thereof.

2. Shaft seal system according to claim 1, **characterized in that** the sealing ring (130) and the actuators (140) are respectively fixed to the stator portion (120).

3. Shaft seal system according to claim 1 or 2, **characterized in that** the actuators (140, 140a, 140b, 140c, 140d) are designed in the form of
- electromagnetically operative actuators (140, 140a),
- electrostatically operative actuators (140c),
- piezoelectrically operative actuators (140b),
- electrostrictive actuators (140b), or
- actuators (140d) having a fluid chamber (148d) for accommodating the control fluid.

## Revendications

1. Système d'étanchéité d'arbre destiné à être agencé entre un arbre (112) pouvant tourner autour d'un axe d'arbre (2) et un boîtier fixe entourant l'arbre, comportant :
- une portion de stator (120) fixe par rapport au boîtier,
- une portion de rotor (114) solidaire en rotation par rapport à l'arbre (112),
- une bague d'étanchéité (130) élastique périphérique pourvue d'une lèvre d'étanchéité élastique (132) qui est disposée dans un interstice entre la portion de stator (120) et la portion de rotor (114) et est fixée à l'une des portions (120), la lèvre d'étanchéité (132) s'appliquant contre la portion conjuguée (114) en regard lorsque l'arbre (112) est immobile et étant espacée par rapport à cette portion conjuguée (114) en regard lors de la rotation de l'arbre (112) pour obtenir une absence de contact,
- une pluralité d'actionneurs actifs (140, 140a, 140b, 140c, 140d) qui sont réalisés et disposés de telle sorte que, par la sollicitation des actionneurs (140, 140a, 140b, 140c, 140d) avec un courant ou un fluide de commande, la lèvre d'étanchéité (132) puisse être déplacée par rapport à la portion conjuguée, et
- un dispositif de commande (148) pour la commande de la sollicitation des actionneurs (140, 140a, 140b, 140c, 140d) avec un courant ou le fluide de commande,
**caractérisé en ce que**
- la pluralité d'actionneurs actifs (140, 140a, 140b, 140c, 140d) sont disposés sur le côté extérieur de la lèvre d'étanchéité (132) de manière répartie sur sa périphérie.

2. Système d'étanchéité d'arbre selon la revendication 1,
**caractérisé en ce que**
la bague d'étanchéité (130) et les actionneurs (140) sont respectivement fixés à la portion de stator (120).

3. Système d'étanchéité d'arbre selon la revendication 1 ou 2,
**caractérisé en ce que**
les actionneurs (140, 140a, 140b, 140c, 140d) sont réalisés sous la forme
- d'actionneurs (140, 140a) à action électromagnétique,
- d'actionneurs (140c) à action électrostatique,
- d'actionneurs (140b) à action piézo-électrique,
- d'actionneurs (140b) électrostrictifs ou
- d'actionneurs (140d) comprenant une chambre de fluide (148d) pour recevoir le fluide de commande.
